# EUROPEAN PATENT APPLICATION

(11) **EP 2 308 312 A1**
(43) Date of publication of application: **13.04.2011**
(21) Application number: 09804885.3
(22) Date of filing: 24.07.2009
(51) Int. Cl.: A21D 6/00, A21D 2/26, A21D 8/04, A21D 13/04, A23L 1/16

(54) **METHOD FOR PRODUCING FOOD DOUGH TO BE COOKED AND METHOD FOR PRODUCING BREAD**

(30) Priority: 05.08.2008 JP 2008201506; 05.08.2008 JP 2008201507
(71) Applicant: Sanyo Electric Co., Ltd., Osaka 570-8677 (JP); Sanyo Consumer Electronics Co., Ltd., Tottori-shi Tottori 680-8634 (JP)
(72) Inventor: SHIMOZAWA, Masayuki, Tottori 680-8634, (JP)
(74) Representative: Glawe, Delfs, Moll
(86) International application number: PCT/JP2009/063261
(87) International publication number: WO 2010/016400

(57) **Abstract**

A method for producing dough includes a grinding process #20 of grinding grains by rotating a grinding blade in a mixture of cereal grains and liquid, and a kneading process #30 of kneading a dough material constituted by the mixture of the ground grains and the liquid with a kneading blade to obtain the dough. The crushing process #20 is preceded by a pre-crushing soaking process #10 in which the grains and the liquid are left to rest in a mixed state. In the kneading process #30, gluten, seasoning, a leavening agent, and the like are added to the dough material or the dough. When the leavening agent is yeast, a step of adjusting the dough temperature to a predetermined temperature before adding the yeast is provided.

## Description

### Technical Field

The present invention relates to a method for producing dough and a method for producing bread.

### Background Art

When consumed as food, cereals are sometimes cooked in the form of grains (grain eating), and sometimes cooked after being ground to flour (flour eating). In the case of the flour eating, flour is typically mixed with water and the resulting mixture is kneaded into a lump of so-called "dough" and then the dough is cooked. In some cases, a seasoning (salt, sugar, egg, butter, shortening, etc.) is mixed with the dough. In other cases, a leavening agent (dry yeast, fresh yeast, wild yeast, guar gum, *koji* (cooked rice and/or soya beans that have been inoculated with a fermentation culture *Aspergillus oryzae*), baking powder, etc.) is mixed with the dough. The thus prepared dough is rolled, stretched, divided by hand, or cut into thin pieces according to the form suitable to the desired food product, and then, after a fermentation process and/or a drying process if necessary, the dough is cooked by baking (bread, cake, pizza, etc.), frying (donuts, fried bread, etc.), steaming (*manju* (Japanese bean-jam buns), steamed bread, etc.), boiling (*udon* (Japanese noodle made from wheat flour), *soba* (Japanese noodle made from a combination of wheat flour and buckwheat flour), spaghetti, etc.), sautéing (*yakisoba* (Japanese sautéed noodle), *jiaozi,* etc.), stewing ("*suiton*" and *"houtou"* each a way of flour eating in Japan, etc.), or the like.

In producing bread, dough prepared for producing bread (hereinafter referred to as "bread dough") is baked after fermentation. Incidentally, the main ingredient of bread has conventionally been wheat as its main ingredient; recently, however, some bread has rice as its main ingredient.

An example of the production method of bread dough is disclosed in Patent Document 1 listed below. Patent Document 1 relates to a method for producing bread dough. According to the method, in preparing bread dough, part of water that is to be added when pre-ferment is mixed with bread dough and the resulting mixture is kneaded, or water that is to be added when all the ingredients are kneaded and stirred in a case of the straight-dough method, is replaced with functional starch liquid which is made by crushing raw rice after lactic acid fermentation.

Various types of automatic baking machines for baking bread in general households have been developed. An example of such automatic baking machines is disclosed in Patent Document 2. In the baking machine disclosed in Patent Document 2, a baking chamber is provided with a cooling portion for reducing the increase of temperature during kneading and fermentation processes.

### Prior Art Documents

### Patent Document

Patent Document 1: JP-A-H09-51754
Patent Document 2: JP-A-2000-116526

### Summary of the Invention

### Problems to be Solved by the Invention

In producing dough (an example of which is bread dough), it has conventionally been necessary to start the production process by obtaining flour by grinding cereal grains such as wheat and rice, or ready-mixed flour made of such flour and various auxiliary ingredients mixed together. Even when there are cereal grains (typically rice) available at hand, it is not easy to consume them in the form of flour, or to produce bread directly from the cereal grains.

The present invention has been made in view of the above problems, and an object of the present invention is to provide a method for producing dough directly from cereal grains without a grinding process, and to widen the scope of cooking cereal grains. The present invention is also aimed at providing a method for producing bread from cereal grains without a grinding process, and to simplify the process of producing bread.

### Means for Solving the Problem

To achieve the above objects, according to one aspect of the present invention, a method for producing dough includes: a crushing process in which cereal grains are crushed into crushed cereal grains by rotating a crushing blade in a mixture of the cereal grains and liquid; and a kneading process in which a mixture of the crushed cereal grains and the liquid is kneaded into dough by a kneading blade.

According to this method, the cereal grains and the liquid are mixed together beforehand, and then the cereal grains are crushed and the mixture of the crushed cereal grains and the liquid, which is dough material, is kneaded into dough. Thus, the dough is obtained in a simplified manner without time and trouble of grinding the cereal grains into flour. Furthermore, cereals present in households in the form of grains, or cereals that are not commercially available in the form of flour can be used, and this widens the variety of cereals to be used for dough-producing, and makes it easier to obtain the material for dough.

According to the present invention, in the above-described method for producing dough, it is preferable that the crushing process and the kneading process proceed in a same container.

With this method, the dough material does not need to be moved from one container to another in transition from the crushing process to the kneading process. This helps reduce time to complete the process, and makes it possible to prevent the volume loss of the dough material caused by part of the dough material sticking to the inner surface of the container used for the crushing process.

According to the present invention, in the above-described method for producing dough, it is preferable that, after the crushing process, there be provided a post-crushing soaking process in which the dough material is left to rest, during which the crushed cereal grains are soaked with the liquid.

With this method, since the cereal grains are soaked with the liquid after they are crushed, it is possible to make the liquid quickly soak into the whole cereal grains.

According to the present invention, in the above-described method for producing dough, it is preferable that gluten be added to the dough material in the kneading process.

With this method, it is possible to produce dough having required elasticity.

According to the present invention, in the above-described method for producing dough, it is preferable that a seasoning be added to the dough material together with the gluten.

With this method, it is possible to improve the taste of food prepared by cooking the dough.

According to the present invention, in the above-described method for producing dough, it is preferable that a leavening agent be added to the dough in the kneading process.

With this method, formation of foam takes place through the cooking of the dough, which makes it possible to obtain food having light texture.

According to the present invention, in the above-described method for producing dough, it is preferable that the leavening agent be yeast, and that, before a step of adding the yeast, there be provided a step of adjusting a dough temperature to a predetermined temperature.

With this method, it is possible to make the yeast work actively under the predetermined temperature.

According to the present invention, in the above-described method for producing dough, it is preferable that, before the crushing process, there be provided a pre-crushing soaking process in which the cereal grains and the liquid are left to rest in a mixed state, during which the cereal grains are soaked with the liquid.

With this method, since the cereal grains are crushed after they are soaked with the liquid, it is easy to crush them to their cores.

According to the present invention, in the above-described method for producing dough, it is preferable that the crushing blade be intermittently rotated during the pre-crushing soaking process.

With this method, the surface of each of the cereal grains is scratched, and this makes it possible for the soaking to be completed quickly.

According to the present invention, in the above-described method for producing dough, it is preferable that the dough be bread dough.

With this method, the cereal grains are mixed with the liquid and then crushed, and the resulting mixture, which is the dough material, is kneaded into bread dough. This makes it possible to obtain bread dough in a simplified manner without time and trouble of grinding the cereal grains into flour. Furthermore, cereals present in households in the form of grains, or cereals that are not commercially available in the form of flour can be used, and this widens the variety of cereals to be used for dough-producing, and makes it easier to obtain the material for dough.

According to another aspect of the present invention, a method for producing bread includes: a fermentation process in which bread dough produced by any one of the above-described methods for producing dough is fermented; and a baking process in which the bread dough after fermentation is baked into bread.

With this method, the production of bread is started by crushing the cereal grains mixed with the liquid to form the dough material, which is the mixture of the crushed cereal grains and the liquid, and this makes it possible to obtain bread in a simplified manner without time and trouble of grinding the cereal grains into flour. Furthermore, cereals present in households in the form of grains, or cereals that are not commercially available in the form of flour can be used, and this widens the variety of cereals to be used for dough-producing, and makes it easy to obtain the material for dough.

According to the present invention, in the above-described method for producing bread, it is preferable that the fermentation process and the baking process proceed in a same container.

With this method, the bread dough does not need to be moved from one container to another in transition from the fermentation process to the baking process, and this helps reduce time to complete the process.

According to the present invention, in the above-described method for producing bread, it is preferable that processes from the crushing process through the baking process proceed in a same container.

With this method, the bread dough does not need to be moved from one container to another from the crushing process through the baking process, and this helps reduce time to complete the process.

According to the present invention, in the above-described method for producing bread, it is preferable that processes from the pre-crushing soaking process through the baking process proceed in a same container.

With this method, the dough material does not need to be moved from one container to another from the pre-crushing soaking process through the baking process, and this helps reduce time to complete the process.

### Advantages of the Invention

According to the present invention, it is possible to obtain dough and bread in a simplified manner without time and trouble of grinding cereal grains into flour. Furthermore, it is possible to produce a large variety of dough and bread by making use of cereals available at hand in the form of grains.

### Brief Description of Drawings

[FIG. 1] A flow chart of overall processes of a first embodiment of dough-producing process;
[FIG. 2] A flow chart of a pre-crushing soaking process;
[FIG. 3] A flow chart of a crushing process;
[FIG. 4] A flow chart of a kneading process;
[FIG. 5] A sectional view of a dough producing apparatus;
[FIG. 6] A graph showing an example of how the temperature of liquid is controlled in the pre-crushing soaking process;
[FIG. 7] A graph showing the flow of processes of producing dough;
[FIG. 8] A flow chart of overall processes of a second embodiment of dough-producing process;
[FIG. 9] A flow chart showing a post-crushing soaking process;
[FIG. 10] A graph showing the flow of the processes of producing dough according to the second embodiment;
[FIG. 11] A flow chart of overall processes of a third embodiment of dough-producing process;
[FIG. 12] A graph showing the flow of the processes of producing dough according to the third embodiment;
[FIG. 13] A flow chart of overall processes of a first embodiment of bread-producing process;
[FIG. 14] A flow chart of a fermentation process;
[FIG. 15] A flow chart of a baking process;
[FIG. 16] A vertical sectional view of an automatic baking machine showing how a mix-in container is attached to the automatic baking machine;
[FIG. 17] A vertical sectional view of an automatic baking machine in a state in which a lid is closed after a mix-in container is attached to the automatic baking machine;
[FIG. 18] A vertical sectional view of the automatic baking machine of FIG. 17 as viewed from a direction perpendicular to the direction from which it is viewed in FIG. 17;
[FIG. 19] A bottom plan view of a mix-in container in a state where a bottom panel is locked in a closed state;
[FIG. 20] A bottom plan view of the mix-in container in a state where the bottom panel is unlocked;
[FIG. 21] A vertical sectional view of an automatic baking machine showing how mix-in is put into a baking container;
[FIG. 22] A vertical sectional view of the automatic baking machine of FIG. 21 as viewed from a direction perpendicular to the direction from which it is viewed in FIG. 21;
[FIG. 23] A flow chart of overall processes of a second embodiment of bread-producing process; and
[FIG. 24] A flow chart of overall processes of a third embodiment of bread-producing process.

### Best Mode for Carrying Out the Invention

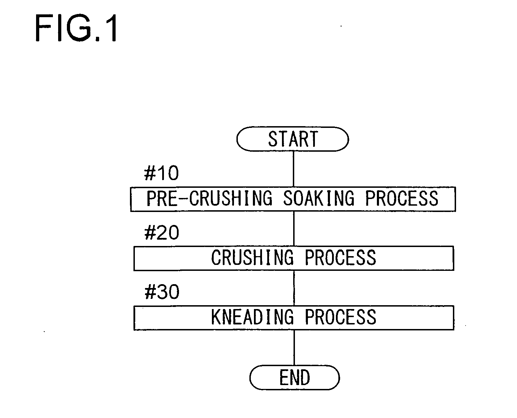

A first embodiment of the method for producing dough will be described based on FIGS. 1 to 7. In the production method shown in FIG. 1, a pre-crushing soaking process #10, a crushing process #20, and a kneading process #30 proceed in this order. Now, the processes will be described one by one.

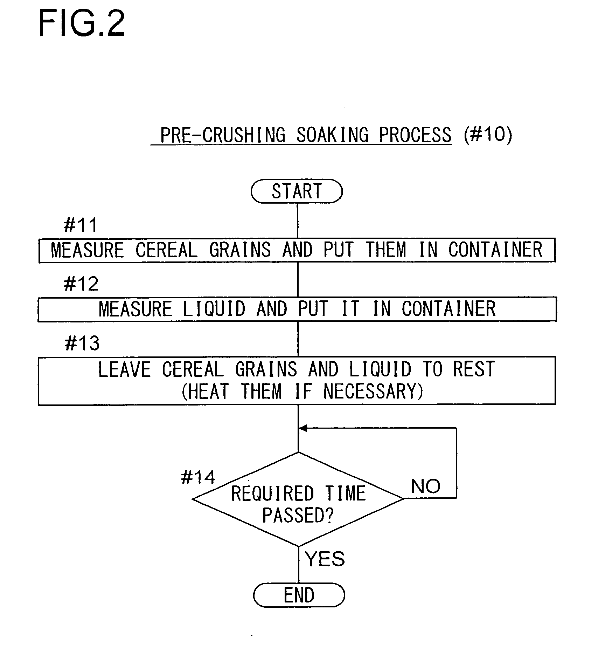

FIG. 2 is a flow chart of the pre-crushing soaking process #10. In step #11, cereal grains (rice is the most easily obtainable, but grains of other cereals such as wheat, barley, foxtail millet, Japanese barnyard millet, buckwheat (*soba*), and corn may be used) are measured, and a certain amount of the cereal grains are put in a container. In step #12, liquid is measured, and a certain amount of the liquid is put in the container. The liquid is typically water, but it may be a soup stock which contains a taste component, or it may be fruit juice. The liquid may contain alcohol. Step #11 and step #12 may be performed in a reverse order. In step #13, a mixture of the cereal grains and the liquid is left to rest in the container, during which the cereal grains are soaked with the liquid. Generally, the higher the liquid temperature is, the faster the cereal grains absorb the liquid, and thus the liquid is heated if necessary. In step #14, it is checked how long the cereal grains and the liquid have been in a mixed state. The pre-crushing soaking process 10 is ended when the cereal grains and the liquid are found to have been in the mixed state for a predetermined time.

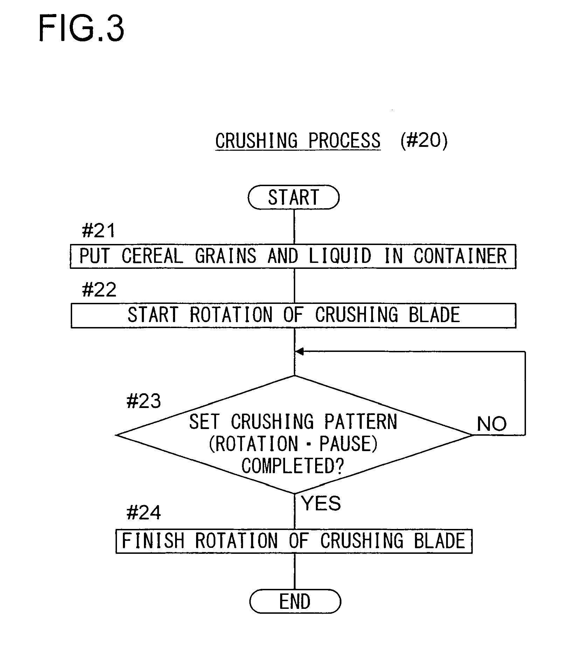

FIG. 3 is a flow chart of the crushing process #20. In step #21, a mixture of the liquid and the cereal grains that has absorbed the liquid in the pre-crushing soaking process #10 is put in a container. In step #22, a crushing blade starts to rotate in the mixture of the cereal grains and the liquid. Since the cereal grains are crushed after the liquid has soaked into them, it is easy to crush them to their cores. In step #23, it is checked whether or not the crushing has been performed according to a set crushing pattern (whether the crushing blade is to be continuously rotated or intermittently rotated interspersed with stop periods, how the intervals be set and how long a rotation period should last in the case of intermittent rotation, etc.). If the crushing of the set crushing pattern is found to have been completed, the process proceeds to step #24, the crushing blade finishes rotating, and the crushing process #20 is completed.

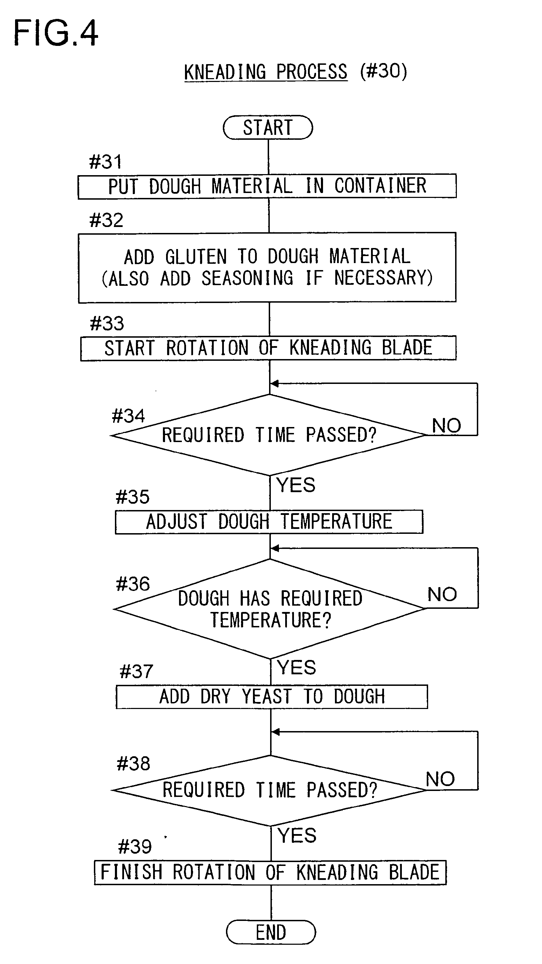

FIG. 4 is a flow chart of the kneading process #30. In step #31, dough material, which is a mixture of the liquid and the crushed cereal grains generated in the crushing process #20, is put in a container. At this time, the dough material is in a pasty or slurry state. Note that, in this specification, a substance that is present at the start of the kneading process #30 is called "dough material," while a substance becoming increasingly similar to the aimed dough as the kneading proceeds is called "dough" even before it is completed as dough.

In step #32, a certain amount of gluten is added to the dough material. A seasoning such as salt, sugar, or shortening is added to the dough material if necessary.

In step #33, a kneading blade starts rotating in the dough material, and kneads the dough material into a lump of dough having required elasticity. In step #34, it is checked how long the kneading blade has been rotating. If the kneading blade is found to have been rotating for a predetermined time, the process proceeds to step #35.

In a case in which a leavening agent that is to be added later is yeast such as dry yeast, fresh yeast, or the like, the dough temperature is adjusted to a temperature at which yeast actively works. Generally, since the dough temperature rises from the crushing process through the kneading process, the dough is placed in a cool environment to lower the dough temperature. In step #36, it is checked whether the dough temperature has reached a required temperature. If the required temperature is found to have been reached, the process proceeds to step #37.

In step #37, yeast (dry yeast in this case) is added to the dough having an adjusted temperature. In a case in which the leavening agent in not dry yeast but, for example, baking powder, steps #35 and 36 may be omitted. In step #38, it is checked how much time has passed since the addition of the dry yeast or the leavening agent other than dry yeast into the dough. If a required time is found to have passed, the process proceeds to step #39, where the kneading blade finishes its rotation. At this time, a lump of dough having desired elasticity is achieved.

The above described kneading process is a typical process of kneading bread dough, in which gluten is added to dough material, and a seasoning such as salt, sugar, or shortening is added to the dough material and the dough material is kneaded, and in the course of the process, yeast is added to dough after the dough temperature is adjusted. As described below, different kneading processes are performed to obtain different types of dough.

### <Dough without gluten>

The crushing process #20 is carried out with a larger ratio of liquid than is used in the case of bread dough described above. Guar gum, sugar, salt, shortening, and/or the like are/is added to the dough material, and then the kneading process #30 is started. Yeast is added in the course of the process, and then the dough material continues to be kneaded. As a result, hard pasty dough is obtained.

### <Cake Dough>

The crushing process #20 is carried out with a ratio of liquid substantially equal to the ratio used in the case of bread dough. Egg, sugar, baking powder, and/or the like are/is added to the dough material, and then the kneading process #30 is carried out. As a result, soft pasty dough is obtained.

### <Udon Dough>

After the crushing process #20, salt is added to the dough material, and then the kneading process #30 is carried out. As a result, elastic dough that is harder than bread dough can be obtained.

### <Pasta Dough>

After the crushing process #20, salt and oil is added to the dough material, and then the kneading process #20 is carried out. As a result, elastic dough that is harder than bread dough can be obtained.

The dough is cooked at different stages depending on the kind of food, that is, at the stage when the kneading process #30 is completed, at the stage when the mixing of gluten and a seasoning with the dough is finished in the course of the kneading process #30, or at the stage when, after the kneading process #30, the dough has undergone a fermentation process and/or a drying process. Dough at any of the above stages may be put in cold or freezer storage, and cooked later. Furthermore, dough at any of the above stages may be subjected to cold or freezer storage treatment to be distributed as commercial products.

Different tools or apparatuses may be used for different processes among the above-described processes, or, one tool or apparatus may be commonly used for carrying out two or more processes among the above-described processes. An example of a case of using different tools or apparatuses for different processes is, for example, a case in which a bowl, a bucket, a washtub, or the like is used for the pre-crushing soaking process #10, a mixer is used for the crushing process #20, and an automatic baking machine is used for the kneading process #30 and subsequent processes.

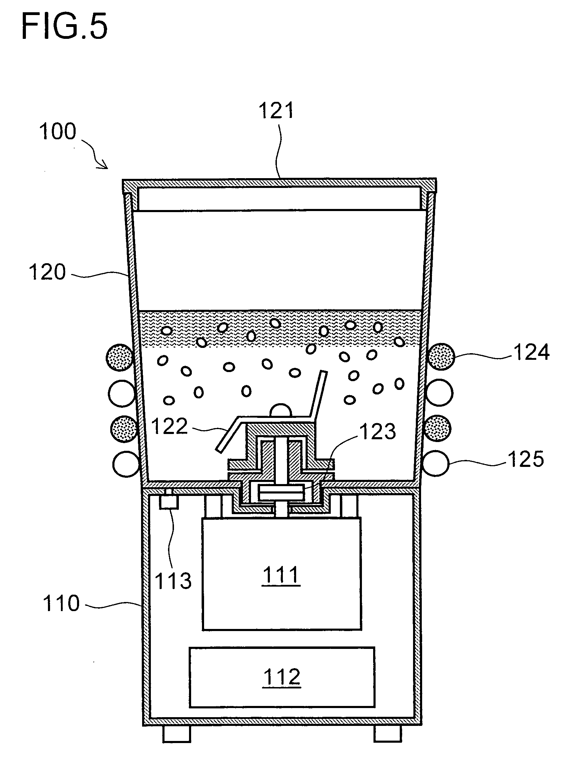

FIG. 5 shows an example of the structure of an apparatus commonly used for carrying out a plurality of processes. A dough producing apparatus 100 is structured such that a container 120 is detachably attached on a main body 110 that incorporates an electric motor 111 and a control board 112. The container 120 is cup-shaped, and an upper opening thereof is sealed with a lid 121. In the middle of a bottom portion of the container 120, there is placed a blade 122 that is commonly used for crushing and kneading. The blade 122 is coupled to the shaft of the electric motor 111 by a coupling 123 to be rotated by the electric motor 111. Placed around an outer peripheral surface of the container 120 are a heating device 124 and a cooling device 125. The heating device 124 can be built with an electro-thermal heating device or an induction heating (IH) device, and the cooling device 125 can be built with a cold water pipe or a Peltier element. The container 120 is preferably formed of a metal having satisfactory thermal conductivity. The main body 110 is provided with a temperature sensor 113 that measures the temperature of the container 120.

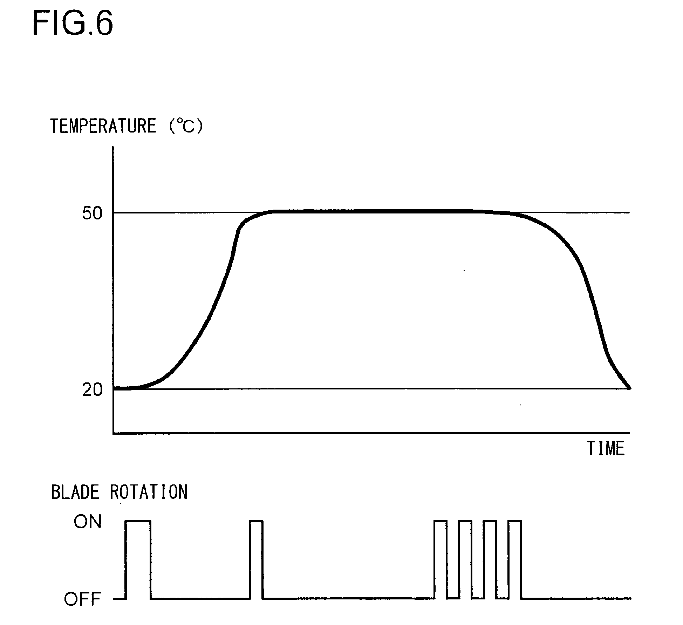

In producing bread dough from cereal grains, the dough producing apparatus 100 is used in the following manner. The lid 121 is removed, a certain amount of cereal grains and a certain amount of liquid are put in the container 120, and thereafter, the lid 121 is fitted in place again, and the pre-crushing soaking process #10 is carried out. During the pre-crushing soaking process #10, the soaking can be promoted by heating the container 120 by the heating device 124 to raise the temperature of the liquid (in this case, water) as shown in FIG. 6. FIG. 6 shows that the temperature of the water is raised from 20°C to 50°C, but this is merely an example, and is not meant as a limitation. The blade 122 is rotated at the beginning of the pre-crushing soaking process #10, and thereafter, the blade 122 is rotated at intervals, to thereby scratch the surface of each cereal grains. This helps promote the absorption of the liquid by the cereal grains, and thus the soaking can be completed quickly.

When the crushing process #20 starts, the blade 122 is rotated at a high speed to crush the cereal grains. As a result, dough material is produced in the form of a mixture of the crushed cereal grains and the liquid. In the kneading process #30, the blade 122 is rotated at a low speed, to thereby knead the dough material into a lump of dough. The rotation direction of the blade 122 in the crushing process #20 and that in the kneading process #30 may be different from each other such that a sharp edge of the blade 122 at one side hits the cereal grains in the crushing process #20 while a surface of a non-sharp edge of the blade 122 at the other side pushes the dough material in the kneading process #30.

At the beginning of the kneading process #30, the lid 121 is opened, and a certain amount of gluten and, as necessary, a certain amount of seasoning are added to the dough material. Then, the lid 121 is closed, and the blade 122 is rotated at a low speed to mix the dough material with the added gluten and seasoning to knead them together. The dough temperature rises through this process. Thus, in the case that dry yeast is to be added later as the leavening agent, the container 120 is timely cooled by the cooling device 125 to cool the dough contained therein. Both in cooling and heating the container 120, the temperature of the container 120 is monitored by the temperature sensor 113 for a correct value of the temperature to be obtained.

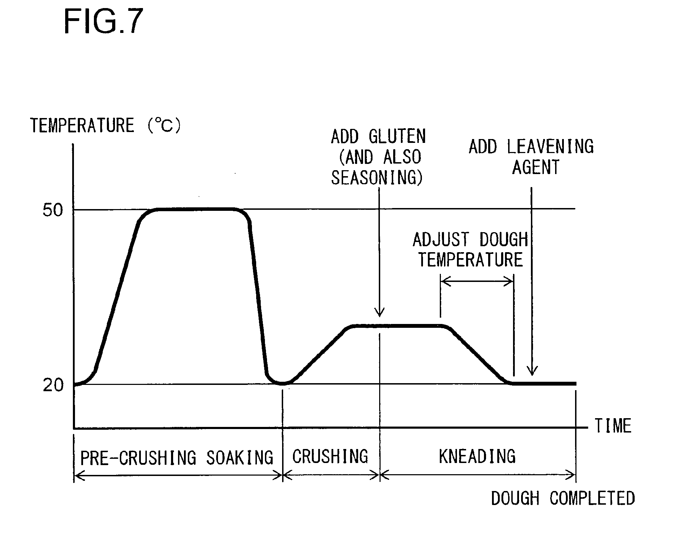

At a time appropriate for putting in the leavening agent, the lid 121 is opened and a certain amount of the leavening agent is put in. Then the lid 121 is closed, the blade 122 is rotated at a low speed to knead the dough and the leavening agent together, and thereby bread dough is obtained. The flow of the processes so far is shown in FIG. 7. Thereafter, the bread dough is taken out of the container 120, or left in the container 120, and ample time is taken for the bread dough to rise. When the bread dough has risen as desired, it is placed in the baking machine and baked into bread.

The processes from the pre-crushing soaking process #10 through the kneading process #30 proceed in the same container 120 as described above, and thus there is no need of moving a substance from one container to another in transition from one process to another. This contributes to the reduction of production time, and in addition, eliminates the problem of part of the cereal grains and dough material being placed on the inner surface of a container used for a previous process so that the amount of cereal grains and dough material is reduced little by little.

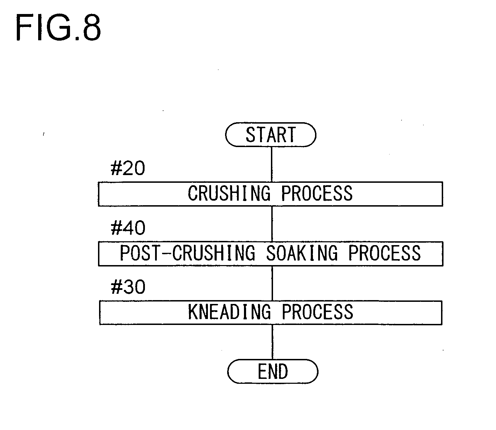

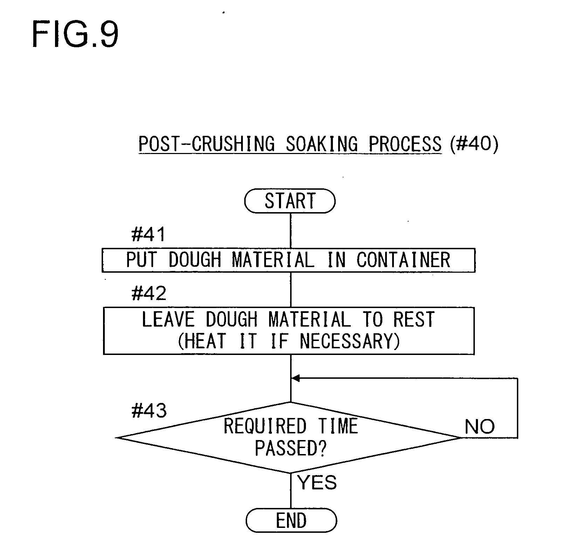

Next, a second embodiment of the method for producing dough will be described based on FIGS. 8 to 10. In the second embodiment, as shown in FIG. 8, the crushing process #20, a post-crushing soaking process #40, and the kneading process #30 proceed in this order. Now, steps in the post-crushing soaking process #40 will be described based on FIG. 9.

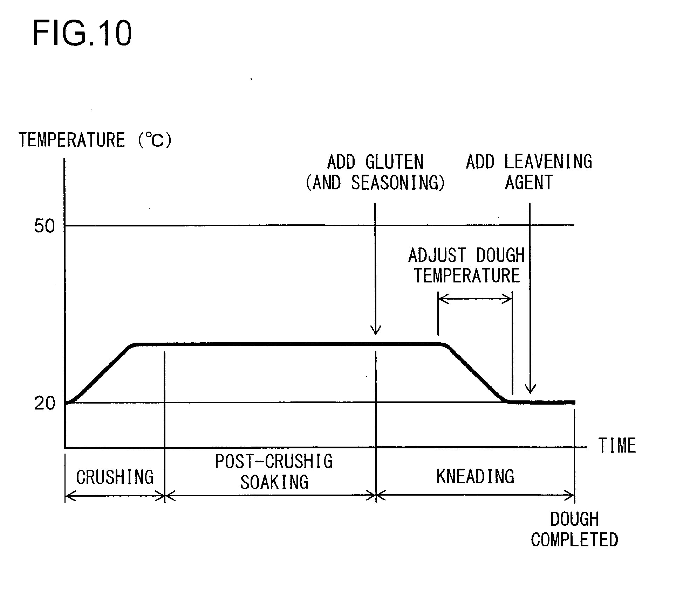

In the flow chart of FIG. 9, first, in step #41, the dough material produced in the crushing process #20 is put in a container. In step #42, the dough material is left to rest in the container, during which the crushed cereal grains are soaked with the liquid. The dough material is heated, if necessary, to promote the soaking. In step #43, it is checked how long the dough material has been left to rest. The post-crushing soaking process #40 is ended when the dough material is found to have been left to rest for a predetermined time. The flow of the overall processes including the kneading process #30 is shown in FIG. 10.

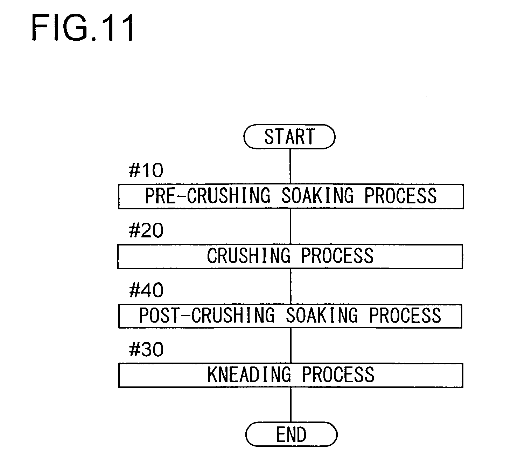

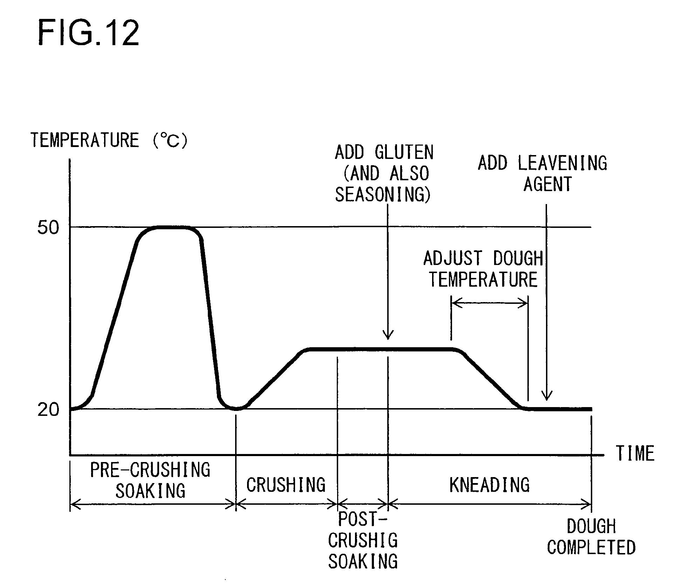

Next, a third embodiment of the method for producing dough will be described based on FIGS. 11 and 12. In the third embodiment, as shown in FIG. 11, the pre-crushing soaking process #10, the crushing process #20, the post-crushing soaking process #40, and the kneading process #30 proceed in this order. The flow of the processes is shown in FIG. 12.

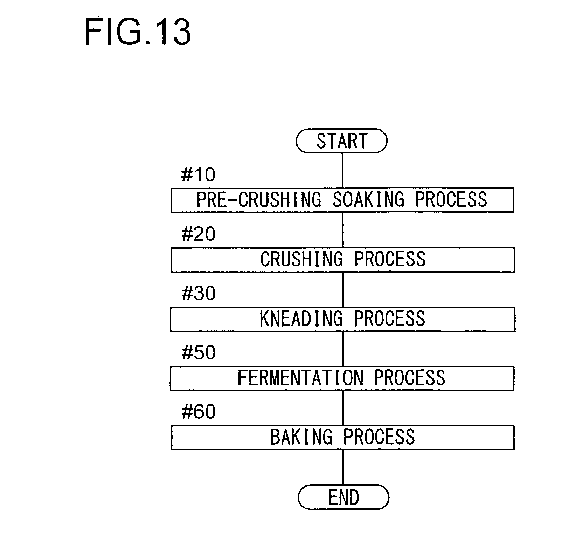

Next, a description will be given of a first embodiment of a method for producing bread will be described based on FIGS. 13 to 15. In the method for producing bread shown in FIG. 13, the pre-crushing soaking process #10, the crushing process #20, the kneading process #30, a fermentation process #50, and a baking process #60 proceed in this order. Since descriptions have been given of the pre-crushing soaking process #10, the crushing process #20, and the kneading process #30, overlapping descriptions thereof will be omitted here, and only the fermentation process #50 and the baking process #60 will be described here.

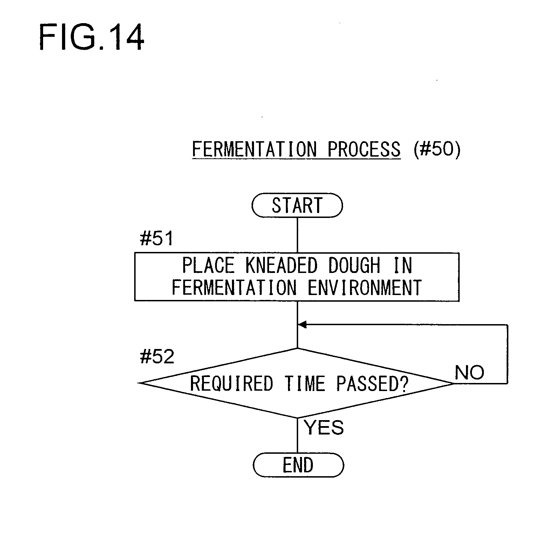

FIG. 14 is a flow chart of the fermentation process #50. In step #51, bread dough that has undergone the kneading process 30 is placed under a fermentation environment. That is, the bread dough is, after being formed into a desired shape, left to rest at a place of a temperature within the temperature range that allows fermentation to proceed. In step #52, it is checked how long the bread dough has been placed in the fermentation environment. If the bread dough is found to have been placed in the fermentation environment for a predetermined time, the fermentation process #50 is ended.

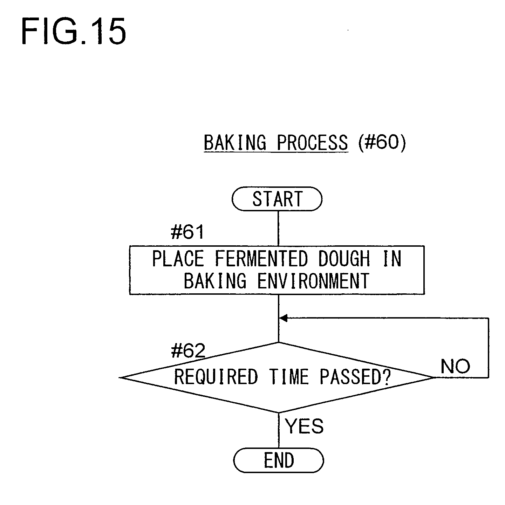

FIG. 15 is a flow chart of the baking process #60. In step #61, the fermented bread dough is placed under a baking environment. That is, the bread dough is left to rest at a place of a temperature within the temperature range suitable for baking bread. In step #62, it is checked how long the bread dough has been placed in the baking environment. If the bread dough is found to have been place in the baking environment for a predetermined time, the baking process #60 is ended.

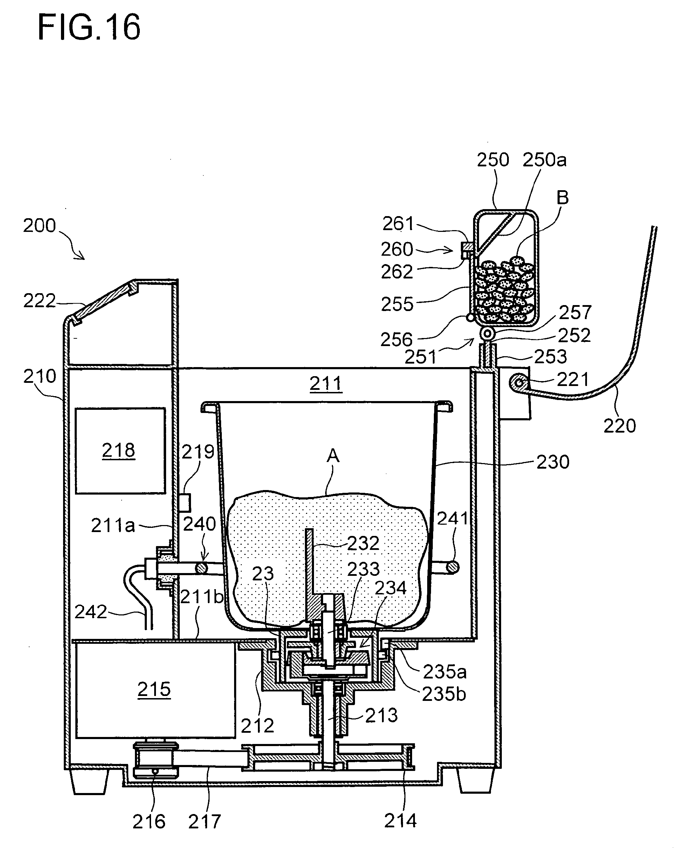

An example of an automatic baking machine that bakes the bread dough after the fermentation will be shown in FIGS. 16 to 22. In FIG. 16, the left side is the front of the automatic baking machine, and the right side is the rear of the same.

An automatic baking machine 200 has a main body 210 and a lid 220 of the main body. Inside the main body 210, there is provided a baking chamber 211 whose upper face is formed as an opening, and the opening is closed by the lid 220. A baking container 230 is placed in the baking chamber 211.

The baking chamber 211 has four sidewalls 211a surrounding a space whose horizontal section is rectangular and a bottom wall 211b. A baking container supporting portion 212 is fixed to a portion of the bottom wall 211b corresponding to the center of the baking chamber. The inside of the baking container supporting portion 212 is exposed to the inside of the baking chamber 211 via an opening portion formed in the bottom wall 211b. The baking container supporting portion 212 has a function of supporting the baking container 230 by being bayonet coupled to a cylindrical pedestal 231 fixed to a bottom surface of the baking container 230. The baking container supporting portion 212 also has a function of supporting a rotary shaft 213 that transfers power to a rotary blade 232 located inside the baking container 230. A pulley 214 is fixed to a lower end of the rotary shaft 213 that protrudes from a lower surface of the baking container supporting portion 212. The pulley 214 is coupled via a belt 217 to an output shaft pulley 216 of a motor 215 that is fixed to the lower surface of the bottom wall 211b.

A control board 218 is disposed in a space between a front-side sidewall 211a of the baking chamber 211 and the front-side outer wall of the main body 210. The control board 218 controls the automatic baking machine 200 according to a signal from a temperature sensor 219 disposed inside the baking chamber 211 and an instruction inputted via an operation panel which will be described later.

The lid 220 is coupled to the main body 210 at the rear surface side of the automatic baking machine 200 via a hinge 221 so as to rotate in a vertical plane around the hinge 221. In the lid 220, there is formed a viewing window 220a provided with a transparent resin lens therein at a position a little inward from a front edge thereof.

An operation panel 222 is disposed at a front-upper corner portion of the main body 210. Although not illustrated in the drawings, the operation panel 222 is provided with a group of operation keys such as a key for selecting the type of bread (wheat bread, rice bread, bread containing mix-in, etc.) a timer key, a start key, and a cancellation key, and a display portion that displays a description of a set cooking program and time set through the timer key.

The baking container 230 is shaped like a bucket, and has a handle (not shown) fitted to its rim for a user to grip. The horizontal sectional shape of the baking container 230 is a rounded rectangle, and the rotary blade 232 that functions as the kneading blade rotates at the center of the baking container 230. The rotary blade 232 is simply fitted in and attached to a noncircular-section portion at the upper end of the rotary shaft 233 pivotally supported at the center of the pedestal 231, and is able to be attached/detached without using a tool. This makes it easy to replace the rotary blade 232 with a rotary blade 232 of another type.

The rotary shaft 233 is coupled to the rotary shaft 213 which transfers power to the rotary shaft 233, and a coupling 234 surrounded by the pedestal 231 is used as power transfer means. The coupling 234 is composed of two members, one of which is fixed to a lower end of the rotary shaft 233, and the other is fixed to an upper end of the rotary shaft 213.

On an outer peripheral surface of the pedestal 231, a protrusion 235b is formed to constitute a well-known bayonet coupling together with a protrusion 235b formed on an inner peripheral surface of the baking container supporting portion 212. By sinking the pedestal 231 into the baking container supporting portion 212 while holding the baking container 230 at an angle such that the protrusions 235a and 235b do not interfere with each other, and then turning the baking container 230 to engage the protrusion 235b under the protrusion 235a, the container 230 is fixed such that it cannot be pulled out upward, and at the same time, the coupling 234 enters into a coupling state. The turning direction of the baking container 230 is same as the rotation direction of the rotary blade 232, and thus rotation of the rotary blade 232 does not cause the baking container 230 to come off. Here, the turning direction of the baking container 230 and the rotation direction of the rotary blade 232 are both set clockwise as viewed from above.

A heating device 240 placed inside the baking chamber 211 surrounds the baking container 230 and heats the bread material. The heating device 240 is built with a sheath heating device 241. An electric current is supplied to the sheath heating device 241 through a heat-proof cable 242.

The automatic baking machine 200 is provided with a mechanism for automatically putting mix-in such as raisins and nuts into dough. The mix-in is put in from mix-in container 250 disposed under the lid 20. The mix-in container 250 is a sealed container formed in a substantially rectangular solid shape that is independent of both the main body 210 and the lid 220. A width of the mix-in container 250 as viewed from the front side is greater than a depth thereof in the front-rear direction. The width is a little narrower than a width of the baking container 230.

The mix-in container 250 is attached to a side of a rim of the baking chamber 211 by using a separable coupling 251. The coupling 251 is composed of: an insertion piece 252 that is fixed to a rear surface of the mix-in container 250 and protrudes below a bottom surface of the mix-in container 250; and a socket 253 that is formed to face upward on a rear-side portion of the rim of the baking chamber 211. The mix-in container 250 and the insertion piece 252 are coupled with each other via a hinge 257, and the mix-in container 250 is rotatable in a vertical plane. An unillustrated spring is incorporated in the hinge 257, and the mix-in container 250 is urged to rotate clockwise with respect to the insertion piece 252 in FIG. 16.

When the insertion piece 252 is inserted into the socket 253, as shown in FIG. 16, the mix-in container 250 stands upright with its front-rear axis standing vertical. This position is the limit of the rotation of the mix-in container 250. In this position, the mix-in container 250 is retracted from over the baking container 230 so as to allow the baking container 230 to be taken out or put in without obstruction. This allows an operation procedure in which the mix-in container 250 is attached to the main body 210 beforehand and the baking container 230 is put in the baking chamber 211 later.

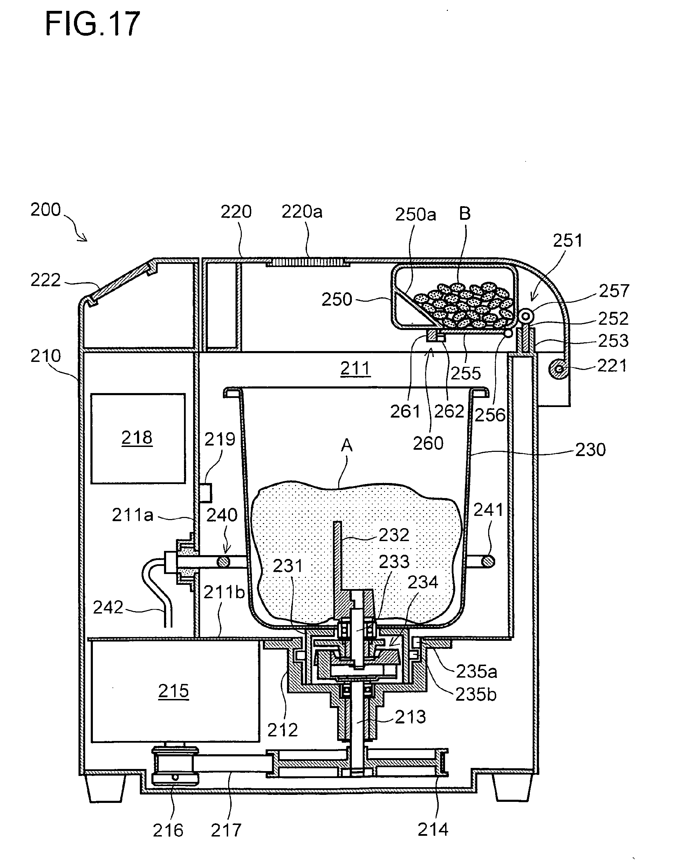

When the lid 220 is closed from the state shown in FIG. 16, the mix-in container 250 is pressed by the lid 220 from behind to hang over the baking container 230 as shown in FIG. 17. Since the mix-in container 250 needs to continue to be pressed, the lid 220 is provided with a lock device (not shown) for locking the lid 220 in a closed state.

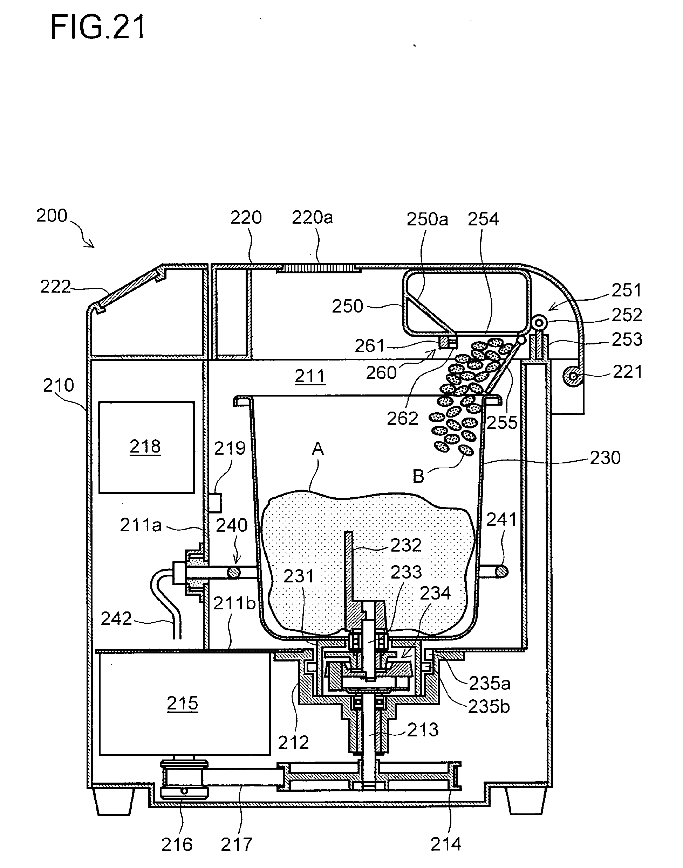

An opening 254 (see FIG. 21) is formed in the bottom surface of the mix-in container 250. The opening 254 is accompanied by a bottom panel 255 that closes the opening 254 to bring the mix-in container 250 to a sealed state. The bottom panel 255 is coupled to the mix-in container 250 via a hinge 256 provided at a side of the opening 254 closer to the coupling 251. The opening 254 is an only port through which mix-in is put in/taken out of the mix-in container 250, with no other opening provided to allow access into the mix-in container 250. This makes it easy to maintain the mix-in container 250 in a sealed state. Furthermore, the opening 254 is formed to extend rearward more than it extends frontward, and correspondingly there is formed an inclined bottom wall 250a at a front portion inside the mix-in container 250 such that a portion of the mix-in existing near the front part of the mix-in container 250 falls without fail.

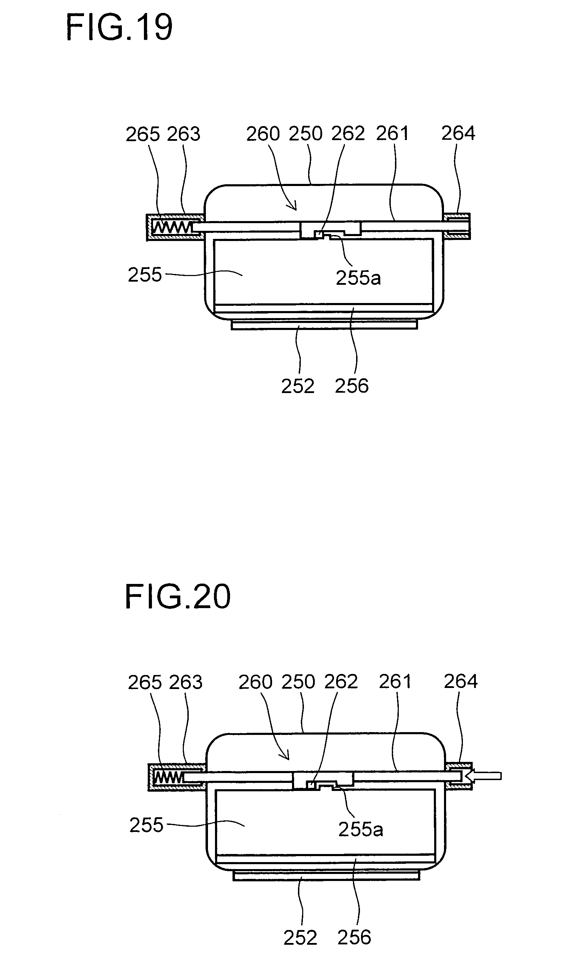

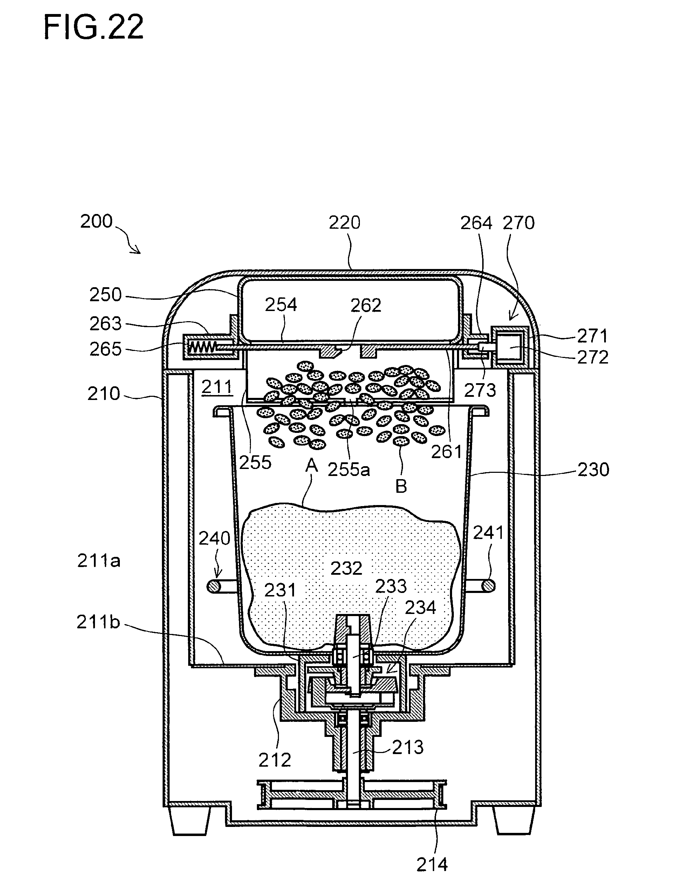

The mix-in container 250 is provided with a locking device 260 that maintains the bottom panel 255 in a closed state. A principal portion of the locking device 260 is a locking rod 261 that is arranged across the bottom surface of the mix-in container 250 from side to side. The locking rod 261 is arranged closer to the front than the bottom panel 255 is. In a middle part of the locking rod 261, there is formed a hook 262 (whose shape is most clearly shown in FIG. 22). The hook 262 engages with a protrusion 255a (whose shape is most clearly shown in FIG. 20), which is formed in a middle part of a free edge of the bottom panel 255, and thereby prevents the bottom panel 255 from opening.

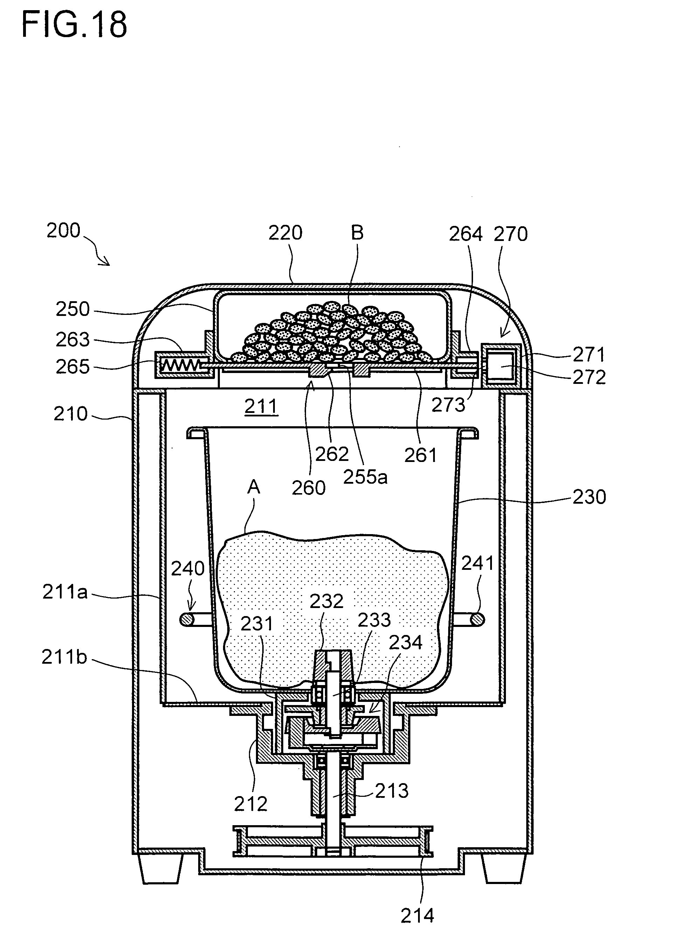

Left and right ends of the locking rod 261 are inserted into sockets 263 and 264 that are fixed to left and right outer surfaces of the mix-in container 250, respectively, and thereby the locking rod 261 is supported to be slidable from side to side. A compression coiled spring 265 is inserted in the socket 263, and the compression coiled spring 265 presses the locking rod 261 rightward as viewed from the front, that is, toward a position where the hook 262 engages with the protrusion 255a of the bottom panel 255. The position where the locking rod 261 is placed in FIG 18 indicates a stroke limit of the locking rod 261, from which the locking rod 261 is not able to slide farther rightward. In this state, the right end of the locking rod 261 is flush with an end of the socket 264 or located within the socket 264 to be slightly away from the end of the socket 264.

The main body 210 is provided with a unlocking device 270 that acts on the locking device 260 to open the bottom panel 255. The unlocking device 270 is built as a solenoid 273 provided within a housing 271 that is formed at the rim of the baking chamber 211. A plunger 273 of the solenoid 273 faces the right end of the locking rod 261 when the mix-in container 250 is pressed by the lid 220 to a position shown in FIG. 17.

When baking bread with mix-in, the mix-in container 250 that is empty is placed on a table or the like with the bottom panel 255 up. Then, the locking rod 261 is made to slide against the compression coiled spring 265, to disengage the hook 262 from the protrusion 255a of the bottom panel 255. Thus, the bottom panel 255 is unlocked. The bottom panel 255 is opened in this way, and then mix-in B is put in the mix-in container 250 through the opening 254. When all of the mix-in B is put in the mix-in container 250, the opening 254 is closed with the bottom panel 255. A tip end of the hook 262 is formed as an inclined surface, and when the bottom panel 255 is closed, the protrusion 255a hits the inclined surface to make the locking rod 261 slide. Finally, the protrusion 255a is held by the hook 262, and the locking device 260 locks the bottom panel 255 in a closed state. Thereafter, the mix-in container 250 is flipped over.

When the mix-in container 250 is ready as described above, the lid 220 is fully opened as shown in FIG. 16. Then the baking container 230 containing dough A is put in the baking chamber 211, and attached to the baking container supporting portion 212. After the baking container 230 is attached, the mix-in container 250 is attached. When the lid 220 is closed after the insertion piece 252 is securely inserted into the socket 253, the mix-in container 250 is held such that it hangs over the baking container 230, and at the same time, the locking rod 261 comes to a position at which a right end of the lock piece 61 faces the plunger 273 of the solenoid 272. In this state, the automatic baking machine 200 is ready to bake bread with the mix-in.

The bread dough A to be put in the baking container 230 may be either bread dough obtained at the end of the kneading process #30 or bread dough obtained at the end of the fermentation process #50. In either case, after the bread dough A is put in the baking container 230, all the processes until the end of the baking process #60 are to proceed in the automatic baking machine 200. Here, the following description will be based on the assumption that the bread dough A that has just gone through the kneading process #30 is put in the baking container 230.

When, after the lid 220 is closed, information of the kind of bread, the cooking program, etc. is inputted via the operation panel 222 and the start key is pressed, the automatic baking machine 200 starts its operation. The control board 218 makes the rotary blade 232 rotate to knead the bread dough A, and energizes the solenoid 272 of the unlocking device 270 in a proper timing. Then, as shown in FIG. 22, the plunger 273 sticks out to make the locking rod 261 slide leftward against the compression coiled spring 265. As a result, the hook 262 is disengaged from the protrusion 255a of the bottom panel 255 to unlock the bottom panel 255, and the unlocked bottom panel 255 rotates around the hinge 254 to hit the edge of the baking container 230 and stops as shown in FIG. 21. As a result, the opening 254 is opened such that the mix-in B in the mix-in container 250 falls to be put into the bread dough A. At this time, the mix-in B slides down the bottom panel 255 that has hit the edge of the baking container 230 and stopped, and thus the mix-in B is smoothly put in without being spilt outside the baking container 230. The further the kneading proceeds, the more the mix-in B put into the bread dough A is mixed and dispersed into the bread dough A.

When the mix-in has fully dispersed into the bread dough A, the fermentation process #50 is started. After the fermentation process #50 is completed, the baking process #60 is started. The control board 218 energizes the heating device 240 with a predetermined energization pattern, such that the bread dough A is baked into bread. After a sign indicating the completion of the bread baking is displayed on the display portion of the operation panel 222 or after a beep is heard announcing the completion of the bread baking, a user opens the lid 220 and takes out the baking container 230. When the lid 220 is opened, the mix-in container 250 takes an upright position as shown in FIG. 16, and is retracted from over the baking container 230. This makes it possible for the user to take out the baking container with baked bread therein without detaching the mix-in container 250 from the main body 210.

As described above, the opening 254 is the only port through which mix-in is put in/taken out of the mix-in container 250, with no other opening provided to allow access into the mix-in container 250. This makes it easy to enhance the sealed state of the mix-in container 250. This makes it possible for the mix-in container 250 to be used such that dry yeast is put therein instead of the mix-in, and the dry yeast is added to the bread ingredient in a proper timing.

The unlocking device 270 may be provided on the lid 220 instead of the main body 210.

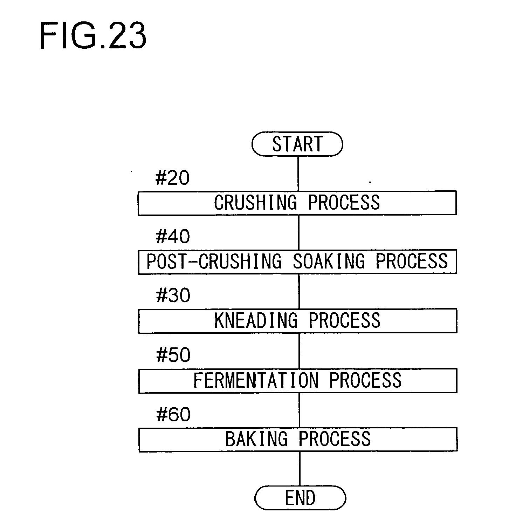

Next, a description will be given of a second embodiment of the method for producing bread will be described based on FIG. 23. In the second embodiment, as shown in FIG. 23, the crushing process #20, the post-crushing soaking process #40, the kneading process #30, the fermentation process #50, and the baking process #60 proceed in this order. Detailed descriptions have already been given of the processes.

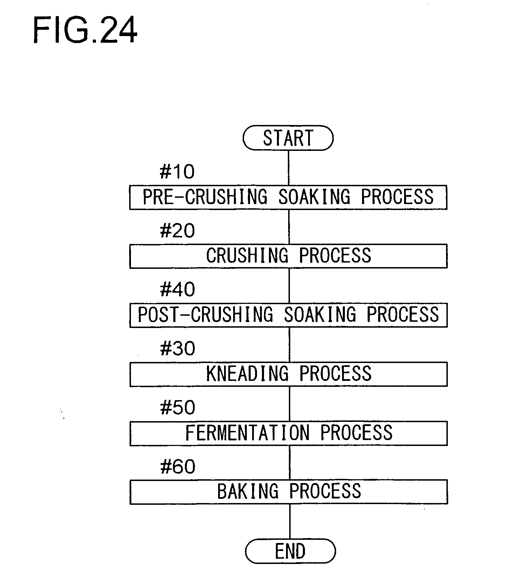

Next, a description will be given of a third embodiment of the method for producing bread will be described based on FIG. 24. In the third embodiment, as shown in FIG. 11, the pre-crushing soaking process #10, the crushing process #20, the post-crushing soaking process #40, the kneading process #30, the fermentation process #50, and the baking process #60 proceed in this order. Detailed descriptions have already been given of the processes.

The provision of a blade for crushing cereal grains in the automatic baking machine 200 makes it possible for processes from the crushing process #20 through the baking process #60, or processes from the pre-crushing soaking process #10 through the baking process #60 to proceed in the same baking container 230.

Descriptions have been given of the embodiments of the present invention, and it should be understood that, in the embodiments described above, many other modifications and variations are possible within the scope of the present invention.

### [Example 1]

220g of rice grains were soaked in 200g of water for two hours. Thereafter, the rice grains and water were put in a mixer, and the mixer was operated for one minute (at a rate between 15,000rpm and 20,000rpm) and was then turned off for one minute; this operation was repeated five times. The total time of the crushing process was five minutes. The mixture of the rice grains and the water, whose temperature had risen to 30°C in the course of the crushing process, was cooled to 20°C, and then the mixture was put in the baking container of a home baking machine as dough material. 50g of gluten, 20g of sugar, 4g of salt, and 10g of shortening were added to the dough material, and they were kneaded together by rotating a rotary blade at a rate between 200 rpm and 300 rpm. 3g of dry yeast was further added along the kneading process, and the kneading was continued. The total time of the kneading process was 16 minutes. After the kneading, resulting bread dough was taken out of the baking container, and was let to ferment for 60 minutes in a fermentation environment at 38°C. Then, the bread dough was put back in the baking container, and was baked for 50 minutes in a baking environment at 130°C. As a result, well-leavened bread was obtained.

### Industrial Applicability

The present invention is applicable to the production of dough. Furthermore, the present invention is also applicable to production of bread.

### List of Reference Symbols

- #10: pre-crushing soaking process
- #20: crushing process
- #30: kneading process
- #40: post-crushing soaking process
- #50: fermentation process
- #60: baking process
- 100: dough producing device
- 120: container
- 122: blade
- 200: automatic baking machine
- 210: main body
- 220: lid
- 211: baking chamber
- 230: baking container
- 250: mix-in container

## Claims

1. A method for producing dough, comprising:
a crushing process in which cereal grains are crushed into crushed cereal grains by rotating a crushing blade in a mixture of the cereal grains and liquid; and
a kneading process in which dough material, which is a mixture of the crushed cereal grains and the liquid, is kneaded into dough by a kneading blade.

2. The method for producing dough according to claim 1, wherein the crushing process and the kneading process proceed in a same container.

3. The method for producing dough according to claim 1, wherein, after the crushing process, there is provided a post-crushing soaking process in which the dough material is left to rest, during which the crushed cereal grains are soaked with the liquid.

4. The method for producing dough according to claim 1, wherein, in the kneading process, gluten is added to the dough material.

5. The method for producing dough according to claim 4, wherein, a seasoning is added to the dough material together with the gluten.

6. The method for producing dough according to claim 1, wherein a leavening agent is added to the dough in the kneading process.

7. The method for producing dough according to claim 6, wherein the leavening agent is yeast, and before a step of adding the yeast, there is provided a step of adjusting a dough temperature to a required temperature.

8. The method for producing dough according to claim 1, wherein, before the crushing process, there is provided a pre-crushing soaking process in which the cereal grains and the liquid are left to rest in a mixed state, during which the cereal grains are soaked with the liquid.

9. The method for producing dough according to claim 8, wherein the crushing blade is intermittently rotated during the pre-crushing soaking process.

10. The method for producing dough according to claim 8, wherein processes from the pre-crushing soaking process through the kneading process proceed in a same container.

11. The method for producing dough according to claim 8, wherein, after the crushing process, there is provided a post-crushing soaking process in which the dough material is left to rest, during which crushed cereal grains are soaked with the liquid.

12. The method for producing dough according to claim 8, wherein gluten is added to the dough material in the kneading process.

13. The method for producing dough according to claim 12, wherein a seasoning is added to the dough material together with the gluten.

14. The method for producing dough according to claim 8, wherein a leavening agent is added to the dough in the kneading process.

15. The method for producing dough according to claim 14, wherein the leavening agent is yeast, and before a step of adding the yeast, there is provided a step of adjusting a dough temperature to a required temperature.

16. The method for producing dough according to any one of claims 1 to 7, wherein the dough is bread dough.

17. The method for producing dough according to any one of claim 8 to 15, wherein the dough is bread dough.

18. A method for producing bread, comprising:
a fermentation process in which bread dough produced by the method for producing dough according to claim 16 is fermented; and
a baking process in which the bread dough after fermentation is baked into bread.

19. The method for producing bread according to claim 18, wherein the fermentation process and the baking process proceed in a same container.

20. The method for producing bread according to claim 18, wherein processes from the crushing process through the baking process proceed in a same container.

21. A method for producing bread, comprising:
a fermentation process in which bread dough produced by the method for producing dough according to claim 17 is fermented; and
a baking process in which the bread dough after fermentation is baked into bread.

22. The method for producing bread according to claim 21, wherein the fermentation process and the baking process proceed in a same container.

23. The method for producing bread according to claim 21, wherein processes from the pre-crushing soaking process through the baking process proceed in a same container.
